# EUROPÄISCHE PATENTANMELDUNG

(11) **EP 2 302 324 A2**
(43) Veröffentlichungstag der Anmeldung: **30.03.2011**
(21) Anmeldenummer: 10178331.4
(22) Anmeldetag: 22.09.2010
(51) Int. Cl.: G01C 21/36

(54) **Verfahren zum Betrieb eines Navigationssystems**

(30) Priorität: 25.09.2009 DE 102009042787
(71) Anmelder: Navigon AG, 20251 Hamburg (DE)
(72) Erfinder: Gaupp, Moritz, 97072, Würzburg (DE)
(74) Vertreter: von den Steinen, Axel

(57) **Zusammenfassung**

Die Erfindung betrifft ein Verfahren zum Betrieb eines Navigationssystems, umfassend eine Kartendatenspeichereinrichtung, in der ein geographisches Gebiet digital mittels einer Vielzahl Vektoren beschrieben ist, zumindest eine Positionsermittlungseinrichtung, mit der die geographische Lage des Navigationssystems bestimmt werden kann, eine Darstellungserzeugungseinheit, die zur Erzeugung graphisch darzustellender Inhalte, insbesondere graphischer Kartenansichten eines Teils des in der Kartenspeichereinrichtung gespeicherten geographischen Gebiets, eingerichtet ist, wobei die Darstellungserzeugungseinheit in zumindest einer Kartenansichtsbetriebsart betrieben werden kann, die eine vogclpcrspcktivischc, insbesondere dynamische, Kartcnansicht erzeugt, zumindest eine, insbesondere optische, Anzeigeeinrichtung mittels der zumindest die Anzeige von mittels der Darstellungserzeugungseinheit erzeugten Kartenansichten erfolgen kann,
mit folgenden Verfahrensschritten,
a) Auslesen eines Teils der Vektoren aus der Kartedatenspeichereinrichtung in die Darstellungserzeugungseinrichtung;
b) Umformen der Vektoren mittels der Darstellungserzeugungseinrichtung anhand von zumindest einer Umformungsvorschrift, wobei die Umformungsvorschriften von der Kartenansichtsbetriebsart abhängen, wobei das Erzeugen einer vogelperspektivischen Kartenansicht zumindest eine Umformungsvorschrift umfasst, bei der eine Umformung von Vektoren aus einem planen Bezugssystem in ein gekrümmtes Bezugssystem erfolgt, wobei das gekrümmte Bezugssystem aus zumindest einem Teil eines Zylindermantels eines Zylinders besteht;
c) Ausgabe einer, auf Basis zumindest eines Teils der umgeformten Vektoren aufgebauten, Kartenansicht mittels der Anzeigeeinrichtung.

## Beschreibung

Die Erfindung betrifft ein Verfahren zum Betrieb eines Navigationssystems nach der Lehre des Anspruchs 1.

Gattungsgemäße Navigationssysteme finden beispielsweise als mobile oder fest eingebaute Navigationsgeräte in Kraftfahrzeugen Verwendung und können vom Fahrer beziehungsweise Benutzer dazu benutzt werden, seine Position zu bestimmen, beziehungsweise einem Fahrweg entlang einer vorgeplanten Route zwischen einem Startpunkt und einem Zielpunkt zu folgen. Dazu umfassen gattungsgemäße Navigationssysteme in aller Regel Anzeigeeinrichtungen, mit denen grafische Darstellungen an den Fahrer ausgegeben werden können. Dabei können die grafischen Darstellungen eine Vielzahl von Informationen und Anweisungen für den Fahrer enthalten. Üblicherweise nimmt dabei eine Kartenansicht einen nicht unerheblichen Teil der Anzeigeeinrichtung ein.

Die Kartenansichten sollen dabei dem Benutzer eine Orientierung erlauben und das Verfolgen des Fahrweges entlang der vorgeplanten Route erleichtern. Für die verschiedenen Darstellungsarten von Kartenansichten besteht ein verbindendes Merkmal darin, dass die Kartenansichten aus Kartendaten generiert werden, die in einer Kartendatenspeichereinrichtung gespeichert vorliegen.

Bei einer bekannten Darstellungsart von Kartenansichten handelt es sich beispielsweise um eine vogelperspektivische Kartenansicht, bei der der Benutzer von einem virtuellen Blickpunkt oberhalb der Kartenoberfläche und hinter der Position des Fahrzeugs beziehungsweise des Navigationssystems einen Kartenausschnitt unter einem bestimmten Blickwinkel und in einer bestimmten Blickrichtung betrachtet. Bei der Erzeugung derartiger Kartenansichten spielen zwei Anforderungen, welche in gegenläufiger Abhängigkeit miteinander verknüpft sind, eine erhebliche Rolle. Dabei handelt es sich einerseits um eine möglichst realistische vogelperspektivische Darstellung der Kartenansicht und andererseits um eine mit möglichst geringem Aufwand durchführbare Erstellung der Kartenansichten anhand der in der Kartendatenspeichereinrichtung gespeicherten Kartendaten.

Eine hochgradig realistische Darstellung vogelperspektivischer Kartenansichten kann beispielsweise dadurch erreicht werden, dass die Kartendaten auf eine sphärische Oberfläche projiziert werden, wodurch, auch bei einer zweidimensionalen Darstellung der Kartenansicht, auf der Anzeigeeinrichtung die Krümmung der Erdoberfläche nachgebildet und eine Horizontlinie erschaffen wird. Derartige Kartenansichten erreichen zwar ein hohes Maß an Realitätsnähe, erfordern aber auch ein erhebliches Maß an Speicher- und Rechenleistung während der Erzeugung. Dadurch kann es, insbesondere bei einer schnellen Änderung des darzustellenden Kartenausschnitts, zu einer verzögerten Darstellung der vogelperspektivischen Kartenansichten kommen, welche zur Beeinträchtigung des Bedienerkomforts führen.

Ebenfalls bekannt sind vogelperspektivische Kartenanzeigen, zu deren Erzeugung die planen Kartendaten lediglich entlang der Vertikalen und/oder Horizontalen der Kartenansicht gestaucht werden und der darzustellende Kartenausschnitt durch Beschneiden mittels einer künstlichen Horizontlinie begrenzt wird. Derartige Kartenansichten sind zwar einfach aus den Kartendaten zu erzeugen und bieten dadurch auch die Möglichkeit, vogelperspektivische Kartenansichten eines sich schnell ändernden Kartenausschnitts in Echtzeit darzustellen, wobei sie jedoch nur eine äußerst geringe Realitätsnähe aufweisen.

Ausgehend von diesem Stand der Technik ist es deshalb Aufgabe der vorliegenden Erfindung, ein neues Verfahren zum Betrieb eines Navigationssystems vorzuschlagen, mit dem vogelperspektivische Kartenansichten mit hoher Realitätsnähe und gleichzeitig geringem Erzeugungsaufwand erstellt und auf einer Anzeigeneinrichtung angezeigt werden können.

Diese Aufgabe wird durch ein Verfahren nach der Lehre des Anspruchs 1 gelöst.

Vorteilhafte Ausführungsformen der Erfindung sind Gegenstand der Unteransprüche.

Grundgedanke des erfindungsgemäßen Verfahrens ist es, eine vogelperspektivische Kartenansicht bereitzustellen, die einerseits den Einfluss der Krümmung der Erdoberfläche auf die Kartenansicht berücksichtigt und dadurch eine realistische Horizontlinie aufweist und gleichzeitig mit einem Mindestmaß an Speicherkapazität und Rechenleistung aus den Daten der Kartendatenspeichereinrichtung erzeugt werden kann. Das mit dem erfindungsgemäßen Verfahren betriebene Navigationssystem umfasst dabei eine Kartendatenspeichereinrichtung, in der ein geographisches Gebiet digital mittels einer Vielzahl von Vektoren beschrieben ist. Die Vektoren beschreiben dabei zumindest die Lage geographischer Objekte bezogen auf ein Bezugssystem. Weiter kann jedoch vorgesehen sein, dass die Vektoren neben Ortskoordinaten auch Eigenschaftskoordinaten umfassen, welche die Farbe, die Textur und/oder die Schattierung des jeweiligen Objekts beschreiben. Bei der Erzeugung dreidimensionaler Computergrafiken sind derartige Vektoren auch unter dem Begriff Vertex bekannt. Daher kann auch davon gesprochen werden, dass das geographische Gebiet durch eine Vielzahl Vertices, welche in der Kartendatenspeichereinrichtung gespeichert sind, digital beschrieben wird.

Daneben umfasst ein mit dem erfindungsgemäßen Verfahren betriebenes Navigationssystem zumindest eine Positionsermittlungseinrichtung, mit der die aktuelle geographische Lage des Navigationssystems bestimmt werden kann. Als Positionsermittlungseinrichtung bietet sich beispielsweise ein GPS-Modul an, welches in der Lage ist, GPS-Signale zu empfangen und daraus die geographische Lage zu bestimmen und gegebenenfalls weiterzuverarbeiten beziehungsweise auszugeben. Alternative und/oder additive Positionsermittlungseinrichtungen sind selbstverständlich ebenfalls möglich.

Weiter umfasst ein Navigationssystem, welches mit dem erfindungsgemäßen Verfahren betrieben wird, eine Darstellungserzeugungseinheit zur Erzeugung grafisch darzustellender Inhalte, insbesondere grafischer Kartenansichten, wobei die Darstellungserzeugungseinheit in zumindest einer Kartenansichtsbetriebsart betrieben werden kann, die eine vogelperspektivische, insbesondere dynamische, Kartenansicht erzeugt. Die Darstellungserzeugungseinheit des Navigationssystems kann beispielsweise in der Form einer Hauptberechnungseinheit (CPU) verwirklicht sein. Ebenfalls möglich ist die Verwendung von zumindest einem sogenannten Grafikchip oder dergleichen als Darstellungserzeugungseinheit.

Schließlich benötigt ein Navigationssystem, welches mit dem erfindungsgemäßen Verfahren betrieben wird, eine Anzeigeeinrichtung, mittels der zumindest die Anzeige von grafisch darzustellenden Inhalten, die von der Darstellungserzeugungseinheit erzeugt wurden, erfolgen kann.

Das erfindungsgemäße Verfahren sieht einen ersten Verfahrensschritt vor, der im Auslesen eines Teils der Vektoren aus der Kartendatenspeichereinrichtung in die Darstellungserzeugungseinrichtung besteht. In dem darauf folgenden Verfahrensschritt werden die, in die Darstellungserzeugungseinrichtung geladenen Vektoren umgeformt. Die Umformung der Vektoren geschieht dabei anhand zumindest einer Umformungsvorschrift, welche von der Kartenansichtsbetriebsart abhängig ist. Mit anderen Worten ausgedrückt bedeutet dies, dass mittels der Umformungen der Vektoren in der Darstellungserzeugungseinrichtung einem Vektor zumindest eine Position zugewiesen wird, die sich auf die Darstellung des Vektors mittels der Anzeigeeinrichtung bezieht. Das erfindungsgemäße Verfahren sieht dabei vor, dass das Erzeugen einer vogelperspektivischen Kartenansicht zumindest eine Umformungsvorschrift umfasst, bei der eine Umformung von Vektoren aus einem planen Bezugssystem in ein gekrümmtes Bezugssystem erfolgt, wobei das gekrümmte Bezugssystem aus zumindest einem Teil eines Zylindermantels eines Zylinders besteht. Die Umformung von Vektoren in ein gekrümmtes, zylindrisches beziehungsweise walzenförmiges Bezugssystem gewährleistet, dass eine vogelperspektivische Kartenansicht erzeugt wird, die eine Krümmung nachbildet beziehungsweise simuliert. Eine so simulierte Krümmung kommt für den Betrachter beziehungsweise Benutzer einer realistischen Darstellung einer sphärisch gekrümmten Erdoberfläche sehr nahe. Darüber hinaus ist die Umformung von Vektoren von einem planen Bezugssystem auf das gekrümmte Bezugssystem eines Zylindermantels jedoch mit besonders einfachen und dadurch schnell durchführbaren Umformungsvorschriften verbunden, so dass die Umformung der Vektoren und damit die Erzeugung vogelperspektivischer Kartenansichten mit einem Mindestmaß an Zeitaufwand und einem Mindestmaß an benötigten Systemressourcen durchgeführt werden kann.

An die Umformung der Vektoren mittels der Darstellungserzeugungseinrichtung schließt sich ein Verfahrensschritt des erfindungsgemäßen Verfahrens an, der die Ausgabe einer, auf Basis zumindest eines Teils der umgeformten Vektoren aufgebauten Kartenansicht mittels der Anzeigeeinrichtung vorsieht.

Gemäß einer vorteilhaften Ausführungsform des erfindungsgemäßen Verfahrens ist der Zylinder, der das gekrümmte Bezugssystem definiert, als gerader Kreiszylinder mit dem Kreisradius r ausgebildet. Derartige Kreiszylinder zeichnen sich durch einen hohen Grad an Symmetrie aus, wodurch zum Umformen der Vektoren aus einem planen Bezugssystem in das gekrümmte Bezugssystem lediglich zumindest eine besonders einfache Umformungsvorschrift ausgeführt werden muss. Auch bezüglich der Annäherung an eine sphärisch gekrümmte Erdoberfläche weisen gerade Kreiszylinder, bezüglich der grafischen Darstellung vogelperspektivischer Kartenansichten, ein hohes Maß an Ähnlichkeit auf. Es kann vorgesehen sein, dass sich die Zylinderachse, die durch die Kreismittelpunkte verläuft, senkrecht auf einer Ebene steht, die von einem Bewegungsvektor, der den momentanen Bewegungszustand, insbesondere die Bewegungsrichtung, beschreibt, und einem Vektor, der durch die aktuelle Fahrzeugposition und den Blickpunkt verläuft, aufgespannt wird.

Aus welchen Vektoren der Kartenspeichereinrichtung eine vogelperspektivische Kartenansicht erzeugt wird, ist grundsätzlich beliebig und hängt in vielen Fällen vom Betriebszustand des Navigationssystems ab. Insbesondere auf einem Fahrweg entlang einer vorgeplanten Route zwischen einem Startpunkt und einem Zielpunkt ist es jedoch besonders vorteilhaft, wenn das Auslesen der Vektoren aus der Kartendatenspeichereinrichtung in Abhängigkeit von der Position und/oder dem Bewegungszustand des Navigationssystems erfolgt.

Deshalb kann ein mit dem erfindungsgemäßen Verfahren betriebenes Navigationssystem neben der zumindest einen Positionsermittlungseinrichtung auch eine Bewegungsermittlungseinrichtung umfassen, mit der der aktuelle Bewegungszustand des Navigationssystems festgestellt werden kann. Die Bewegungsermittlungseinrichtung kann beispielsweise derart vorgesehen sein, dass sie die zeitliche Änderung der geographischen Position anhand der zeitlichen Änderung der Ausgangssignale der Positionsermittlungseinrichtung bestimmt. Alternative und/oder additive Bewegungsermittlungseinrichtungen sind für den Fachmann natürlich ebenfalls naheliegend. Beispielsweise können Trägheits- und/oder Kreiselsensoren die Bewegungsermittlungseinrichtung darstellen bzw. von der Bewegungsermittlungseinrichtung umfasst werden. Durch die Analyse und/oder Weiterverarbeitung der Ausgangssignale von Positionsermittlungseinrichtung und Bewegungsermittlungseinrichtung können gleich mehrere Vorteile verwirklicht werden. Zunächst kann dadurch sichergestellt werden, dass die ausgelesenen Vektoren ein geographisches Gebiet im Umfeld der aktuellen Position des Navigationssystems beschreiben und dadurch das Erzeugen einer informativen, intuitiv verständlichen, vogelperspektivischen Kartenansicht erlauben. Darüber hinaus können die auszulesenden Vektoren jedoch auch derart eingeschränkt werden, dass unnötige Umformungen mittels der Darstellungserzeugungseinrichtung vermieden werden.

Grundsätzlich gibt es eine Vielzahl von Eigenschaften, die einen Einfluss auf die, auf der Anzeigeeinrichtung dargestellte, vogelperspektivische Kartenansicht ausüben. Um eine möglichst optimale, an den Betriebszustand des Navigationssystems angepasste Darstellung von Kartenansichten zu erreichen, ist es daher vorteilhaft, dass zumindest ein Teil dieser Einflüsse durch Ansichtsparameter beschrieben wird und das Erzeugen einer vogelperspektivischen Kartenansicht in Abhängigkeit dieser Ansichtsparameter erfolgt.

Der virtuelle Blickpunkt einer vogelperspektivischen Ansicht ist beispielsweise eines der Merkmale, welches einen erheblichen Einfluss auf die erzeugte Kartenansicht hat. Der Blickpunkt wird für gewöhnlich von der aktuellen Fahrzeugposition ausgehend, entgegen der aktuellen Bewegungsrichtung bestimmt. Da es sich um eine vogelperspektivische Kartenansicht handelt, wird dem Blickpunkt auch eine Höhe oberhalb der Kartenoberfläche bzw. der Position des Navigationssystems zugewiesen. Je höher der Blickpunkt der perspektivischen Ansicht gewählt wird, desto weniger Details können in der Kartenansicht angezeigt werden und ein desto größeres geographisches Gebiet kann abgebildet werden. Daher ist es besonders vorteilhaft, wenn der Blickpunkt der vogelperspektivischen Kartenansicht durch einen Ansichtsparameter festgelegt wird. Darüber hinaus bietet es sich ebenfalls an, dass der Blickwinkel, unter dem die vogelperspektivische Kartenansicht erzeugt wird, sowie der Kreisradius r des Zylinders, der das gekrümmte Bezugssystem beschreibt, durch jeweils zumindest einen Ansichtsparameter definiert werden.

Da die Ansichtsparameter, wie bereits angesprochen, eine erhebliche Auswirkung auf die zu erzeugende vogelperspektivische Kartenansicht haben, sieht das erfindungsgemäße Verfahren in einer vorteilhaften Ausführungsform vor, dass die Ansichtsparameter in Abhängigkeit von der Position des Navigationssystems und/oder des Bewegungszustandes des Navigationssystems bestimmt werden. Beispielsweise kann vorgesehen sein, dass bei einer Fahrt auf einer Straße mit hoher Straßenklasse, wie beispielsweise einer Autobahn, eine vogelperspektivische Kartenansicht erzeugt wird, die einen relativ hohen Blickpunkt, einen weit nach vorne gerichteten Blickwinkel und einen relativ geringen Krümmungsradius aufweist. Eine solche Wahl der Ansichtsparameter stellt sicher, dass dem Benutzer bei schneller Fahrt eine Kartenansicht angezeigt wird, welche ein möglichst großes geographisches Gebiet umfasst, dessen Ausdehnung besonders in Fahrtrichtung möglichst weit reicht und eine an diese Darstellung angepasste Simulation der Krümmung der Erdoberfläche aufweist. Somit kann die Anforderung an die Kartenansicht erfüllt werden, dass eine möglichst informative, eine vorgeplante Route besonders einfach verfolgen lassende und/oder ein vorausschauendes Fahren ermöglichende Anzeige mittels der Anzeigeeinrichtung verwirklicht wird.

Aufgrund komplizierter Umformungen zur Erstellung vogelperspektivischer Kartenansichten aus Kartendaten bei bekannten Navigationssystemen ist es bei Verfahren aus dem Stand der Technik oftmals erforderlich, dass Datenzwischenspeicher mit Kartendaten bevorratet werden, um dynamische, vogelperspektivische Kartenansichten in Echtzeit generieren zu können. Diese Vorgehensweise ist im Bereich von Computergrafiken unter dem Begriff Caching beziehungsweise Caching-Methoden bekannt. Die Zwischenspeicherung von Kartendaten im sogenannten Cache ermöglicht die Umformung der darin gespeicherten Kartendaten, ohne diese zunächst beziehungsweise erneut aus der Kartendatenspeichereinrichtung auslesen zu müssen. Damit kann bei zeit- und rechenaufwendigen Umformungen die Erzeugungsdauer für das Erzeugen einer vogelperspektivischen Kartenansicht reduziert werden. Caching-Methoden können die Darstellungsdauer besonders dann reduzieren, wenn der Blickwinkel beziehungsweise die Blickrichtung der vogelperspektivischen Kartenansicht um einen nicht unerheblichen Wert geändert wird. Dieses ist beispielsweise der Fall, wenn das Navigationssystem beziehungsweise das Fahrzeug, in dem es zum Einsatz kommt, an einem Kreuzungspunkt beziehungsweise Verzweigungspunkt einen Abbiegevorgang durchführt. In diesem Fall ändert sich oftmals in einem geringen Zeitraum die darzustellende Kartenansicht vollständig, was dazu führt, dass andere Vektoren bzw. Vertices aus der Kartendatenspeichereinrichtung ausgelesen und zur Darstellung umgeformt werden müssen.

Nachteilig an diesen Zwischenspeicherungs- beziehungsweise Caching-Verfahren ist, dass einerseits der Cache im Sinne einer physikalischen Speichereinrichtung bereit gestellt werden muss und andererseits die Auswahl und Zwischenspeicherung von Kartendaten im Cache mit nicht unerheblichen Problemen verbunden sind und zudem eine zusätzliche Belastung der Ressourcen des Navigationssystems darstellen. Deshalb sieht eine weitere, vorteilhafte Ausgestaltung des erfindungsgemäßen Verfahrens vor, dass das Erzeugen dynamischer, vogelperspektivischer Kartenansichten während der Laufzeit des Navigationssystems in Echtzeit erfolgt, wobei die in der Darstellungserzeugungseinrichtung umzuformenden Vektoren direkt aus der Kartenspeichereinrichtung ausgelesen werden. Mit anderen Worten ausgedrückt bedeutet dies, dass zum Erzeugen dynamischer, vogelperspektivischer Kartenansichten keine Caching-Methoden mehr benötigt werden. Ermöglicht wird dies, wie bereits beschrieben, durch die vorteilhaften Umformungsvorschriften des erfindungsgemäßen Verfahrens. Der damit einhergehende, reduzierte Aufwand zum Erzeugen vogelperspektivischer Kartenansichten erlaubt es, die Schritte Auslesen aus der Kartendatenspeichereinrichtung, Umformen mittels der Darstellungserzeugungseinrichtung und Ausgeben an der Anzeigeeinrichtung in Echtzeit und insbesondere ohne weitere Zwischenspeicherung von Daten auszuführen, selbst wenn sich die auszulesenden Vektoren schnell vollständig ändern.

In welchem Stadium der Umformung die Umformungsvorschrift ausgeführt wird, bei der eine Umformung der Vektoren aus einem planen Bezugssystem in ein gekrümmtes Bezugssystem erfolgt, ist grundsätzlich beliebig. Es ist jedoch vorteilhaft, wenn diese Umformungsvorschrift Teil eines Umformungsvorgangs ist, der auf die aus der Kartendatenspeicherungseinrichtung ausgelesenen Vektoren angewendet wird. Ein Umformungsvorgang, der auf die Rohdaten eines digital gespeicherten Bildes angewendet wird, kann allgemein als Rendering bezeichnet werden. Das Einbeziehen der Umformung der Vektoren von einem planen Bezugssystem in ein gekrümmtes Bezugssystem in das Rendering hat den Vorteil, dass die entsprechende Umformungsvorschrift in einfacher Weise in weitere, für das Rendering nötige, Umformungsvorschriften integriert werden kann. So können beispielsweise Umformungsvorschriften, die eine Stauchung beziehungsweise Dehnung in horizontaler und/oder vertikaler Richtung verursachen, in einfacher Weise mit der Umformungsvorschrift verknüpft werden, die die Umformung in das gekrümmte Bezugssystem beschreibt.

Alternativ dazu kann vorgesehen sein, dass die Umformungsvorschrift, bei der eine Umformung von Vektoren aus einem planen Bezugssystem in ein gekrümmtes Bezugssystem erfolgt, angewendet wird, nachdem mittels eines Umformungsvorgangs bereits eine plane vogelperspektivische Kartenansicht aus den Vektoren der Kartendatenspeicherungseinrichtung erzeugt wurde. Dies bedeutet also, dass mittels der Darstellungserzeugungseinrichtung in einem ersten Umformungs- beziehungsweise Renderingvorgang die Vektoren aus der Kartendatenspeicherungseinrichtung zunächst zu einer planen, vogelperspektivischen Kartenansicht umgeformt werden und anschließend durch Anwendung einer weiteren Umformungsvorschrift von dem planen Bezugssystem in ein gekrümmtes Bezugssystem überführt werden. Für ein derartiges Vorgehen eignen sich sogenannte Shader beziehungsweise Vertex-Shader, die durch die Manipulation einzelner Vertices dazu dienen, die Geometrie einer Kartenansicht zu verändern. Dabei können die die Umformung vornehmenden Shader in der sogenannten Grafikpipeline angeordnet und Soft- und/oder Hardwarekomponenten umfassen.

Abhängig von der Art und Weise, in der ein geographisches Gebiet digital mittels einer Vielzahl von Vektoren beschrieben ist, kann es für das erfindungsgemäße Verfahren vorteilhaft sein, wenn die Umformungsvorschrift, bei der eine Umformung von Vektoren aus einem planen Bezugssystem in ein gekrümmtes Bezugssystem erfolgt, für unterschiedliche, von der Art der in der Kartendatenspeicherungseinrichtung gespeicherten Vektoren abhängige, Weise definiert ist. Dabei lassen sich zwei grundsätzliche Arten von Vektoren zur Beschreibung eines geographischen Gebiets unterscheiden. In einer ersten Variante beschreiben die Vektoren ein geographisches Gebiet in der Form einer planen zweidimensionalen Karte. In der zweiten Variante beschreiben die Vektoren das geographische Gebiet als eine dreidimensionale Terrainkarte. Dementsprechend sind bei einer Umformung von Vektoren aus einem planen Bezugssystem in ein gekrümmtes Bezugssystem jeweils unterschiedliche Umformungsvorschriften zu berücksichtigen. Beim Umformen zweidimensionaler Karten ist es erforderlich, eine virtuelle Höhe zu definieren und zu verändern, wobei es bei dreidimensionalen Karten ausreicht, den bereits definierten Höhenwert eines Vektors umzuformen. Deshalb ist es besonders vorteilhaft für das erfindungsgemäße Verfahren, dass eine Umformungsvorschrift, bei der eine Umformung von Vektoren aus einem planen Bezugssystem in ein gekrümmtes Bezugssystem erfolgt, für Vektoren definiert ist, die ein geographisches Gebiet zweidimensional und/oder dreidimensional beschreiben.

Weiter kann vorgesehen sein, dass für die Umformungsvorschrift, bei der eine Umformung von Vektoren aus einem planen Bezugssystem in ein gekrümmtes Bezugssystem erfolgt, ein Abbruchkriterium definiert ist. Die Art und Weise, in der das Abbruchkriterium definiert wird, ist grundsätzlich beliebig. Jedoch ist es vorteilhaft, wenn das Abbruchkriterium so definiert ist, dass unnötige Umformungen von Vektoren ausgeschlossen werden. Unnötige Umformungen sind dabei beispielsweise Umformungen von Vektoren, die sich nach der Umformung unterhalb der, durch die Krümmung des Bezugssystems erzeugten Horizontlinie befänden. Damit können auch die Ansichtsparameter einen Einfluss auf ein Abbruchkriterium der Umformungsvorschrift ausüben. So kann beispielsweise in Abhängigkeit von der Höhe des Blickpunktes, des Blickwinkels und/oder weiterer Ansichtparameter ein Abbruch der Umformung vorgesehen werden. Dadurch wird sichergestellt, dass zur Erzeugung der Kartenansicht keine Umformungen von Vektoren vorgenommen werden, die letztendlich nicht Teil der Kartenansicht auf der Anzeigeeinrichtung sind.

In einer weiteren vorteilhaften Ausführungsform kann die Darstellungserzeugungseinheit in zumindest einer zweiten Kartenansichtsbetriebsart betrieben werden, die eine vogelperspektivische, insbesondere dynamische, Kartenansicht erzeugt, wobei die Umformung von Vektoren mittels der Darstellungserzeugungseinheit zumindest eine Umformungsvorschrift umfasst, bei der eine Umformung von Vektoren aus einem planen Bezugssystem in ein gekrümmtes Bezugssystem erfolgt, wobei das gekrümmte Bezugssystem aus zumindest einem Teil einer Kugeloberfläche besteht. Die Möglichkeit, die Darstellungserzeugungseinheit in einer zweiten Kartenansichtsbetriebsart zu betreiben, die zur Erzeugung sphärisch verzerrter, perspektivischer Kartenansichten führt, ist besonders vorteilhaft, wenn eine Kartenansicht erzeugt werden soll, deren Blickpunkt weit oberhalb der Position des Navigationssystems angesiedelt ist. In diesem Fall ist eine Annäherung der Krümmung der Erdoberfläche durch eine Umformung in ein walzenförmiges Bezugssystem nicht mehr ausreichend, um eine realitätsnahe Wirkung der Kartenansicht zu erreichen.

Da die Ansichtsparameter ausschlaggebend dafür sind, ob eine Umformung in ein walzenförmig gekrümmtes Bezugssystem als ausreichend realistisch angenommen werden kann oder ob eine Umformung in ein sphärisch verzerrtes Bezugssystem zu bevorzugen ist, ist es besonders vorteilhaft, wenn die Auswahl der Kartenansichtsbetriebsart in Abhängigkeit der Ansichtsparameter erfolgt. Da die Ansichtsparameter gemäß einer vorteilhaften Ausführung von der Position und dem Bewegungszustand des Navigationssystems abhängen, ist es daher ebenfalls vorteilhaft, wenn die Auswahl der Kartenansichtsbetriebsart in Abhängigkeit von der Position des Navigationssystems und/oder des Bewegungszustandes des Navigationssystems erfolgt. Damit wird letztendlich sichergestellt, dass die vogelperspektivische Kartenansicht zu jedem Zeitpunkt und insbesondere in jeder Bewegungssituation ein hohes Maß an Realitätsnähe aufweist.

Verschiedene Aspekte der Erfindung sind in der Zeichnung schematisiert dargestellt und werden nachfolgend beispielhaft erläutert.

Es zeigt:

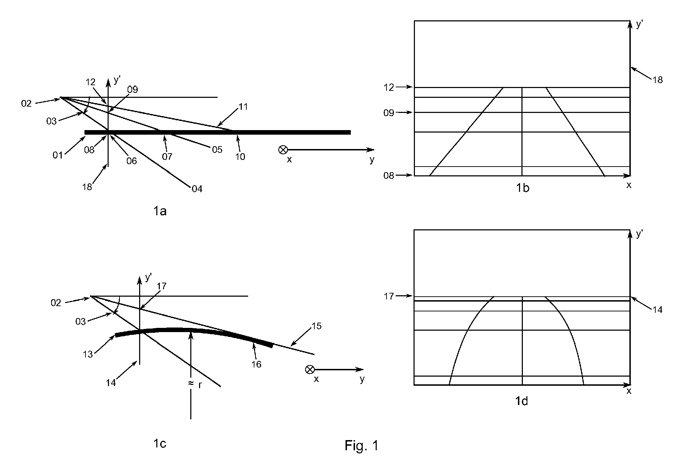

- Fig. 1: eine grafische Darstellung einer bekannten Umformung zum Erzeugen einer vogelperspektivischen Kartenansicht und die daraus entstehende vogelperspektivische Kartenansicht, so- wie eine grafische Darstellung einer erfindungsgemäßen Umformung zur Erstellung einer vogelperspektivischen Kar- tenansicht und die daraus resultierende vogelperspektivische Kartenansicht.

Die **Figur 1a** zeigt die Kartenebene 01, in der mittels Vektoren geographische Objekte eines geographischen Gebiets beschrieben sind. Der Blickpunkt 02 liegt oberhalb der Kartenebene 01, wodurch eine vogelperspektivische Kartenansicht erzeugt wird. Der Blickwinkel 03 definiert den, ausgehend vom Blickpunkt 02, darzustellenden Kartenbereich. Die Geraden 04 und 05 symbolisieren die Umformungsvorschrift für Vektoren mit der y-Koordinate 06 beziehungsweise 07 auf die y'-Koordinate der vogelperspektivischen Kartenansicht mit den y'-Koordinaten 08 beziehungsweise 09. Mit anderen Worten ausgedrückt wird ein Kartenobjekt an der y-Koordinate 07 durch eine Gerade 05, ausgehend vom Blickpunkt 02, durch die y-Koordinate 07 auf die y'-Koordinate 09 durch den Schnittpunkt der Abbildungsgeraden 05 mit der xy'-Darstellungsebene 18 abgebildet.

Wie aus der **Figur 1a** ersichtlich, führt eine Umformung gemäß einer Umformungsvorschrift, die durch die Geraden 04 und 05 symbolisiert wird, dazu, dass prinzipiell beliebig weit vom Blickpunkt 02 in y-Richtung der Kartenebene 01 entfernte Vektoren in eine y'-Koordinate der Kartenansicht beziehungsweise der xy'-Darstellungsebene 18 umgeformt werden. Dementsprechend führt die bekannte Umformung gemäß **Figur 1a** nicht zur Bildung einer Horizontlinie. Daher ist es erforderlich, dass in der Umformung der **Figur 1a** eine künstliche Horizontlinie definiert werden muss. Das Abschneiden der darzustellenden Karte an der y-Koordinate 10 der Kartenebene führt gemäß der, durch die Geraden 11 symbolisierte, Umformung zu der künstlichen Horizontlinie 12 in der bekannten vogelperspektivischen Kartenansicht.

Zusammen mit einer Umformungsvorschrift bezüglich der X-Koordinaten der Kartenebene 01 entsteht dadurch die, in **Figur 1b** dargestellte, vogelperspektivische Kartenansicht.

In **Figur 1c** ist ein Teilaspekt der erfindungsgemäßen Umformung grafisch schematisiert dargestellt. Ausgehend von dem Blickpunkt 02 unter dem Blickwinkel 03 findet eine Umformung von Vektoren aus der Kartenebene 13 auf die xy'-Bildebene 14 statt. Die xy'-Bildebene 14 ist dabei sowohl in der graphischen Veranschaulichung der Umformung in der **Figur 1c** als auch in der aus der Umformung entstehenden Kartenansicht der **Figur 1d** enthalten. Die Besonderheit dieser Umformung liegt darin, dass es sich bei der Kartenebene 13 um eine Kartenebene handelt, die mittels einer Umformungsvorschrift aus einem planen Bezugssystem in ein gekrümmtes Bezugssystem umgeformt ist. Das gekrümmte Bezugssystem wird durch die Mantelfläche eines geraden Kreiszylinders mit dem Kreisradius r gebildet. Dabei spielt es in erster Linie keine Rolle, ob die gekrümmte Kartenebene 13 direkt anhand von Vektoren der Kartendatenspeichereinrichtung oder indirekt, im Anschluss an einen zunächst vorgenommenen Renderingprozess erstellt wird.

Wie man anhand der Geraden 15, die wiederum einer symbolischen Darstellung einer Umformungsvorschrift von der Kartenebene 13 in die xy'-Bildebene 14 entspricht, erkennt, entsteht bei dem erfindungsgemäßen Verfahren eine natürliche Horizontlinie an der Position 16 der gekrümmten Kartenebene 13 sowie an der y'-Koordinate 17 der vogelperspektivischen Kartenansicht der **Figur 1d****.**

Zusammen mit einer Umformungsvorschrift der x-Koordinaten der gekrümmten Kartenebene 13 entsteht gemäß einer Umformung, wie in **Figur 1c** schematisiert, die vogelperspektivische Kartenansicht der **Figur 1d****,** welche in der Lage ist, die Krümmung der Erdoberfläche realistisch nachzubilden und damit eine insgesamt realistische vogelperspektivische Kartenansicht darstellt. Die Umformung in ein gekrümmtes Bezugssystem, wie beispielsweise die Kartenebene 13, kann mit äußerst einfachen Umformungsvorschriften beziehungsweise mit einer äußerst einfachen Umformungsvorschrift bewerkstelligt werden.

Daher geht anhand des Vergleichs der **Figur 1a** mit der **Figur 1c** eindeutig hervor, dass die Gesamtumformung gemäß des erfindungsgemäßen Verfahrens, wenn überhaupt, nur minimal anspruchsvoller ist, als die Umformung der **Figur 1a****.** Andererseits ist beim Vergleich der **Figur 1b** mit der **Figur 1d** eindeutig zu erkennen, dass das erfindungsgemäße Verfahren die Erzeugung von vogelperspektivischen Kartenansichten ermöglicht, die, nicht nur durch die Existenz einer Horizontlinie 17, ein sehr viel höheres Maß an Realitätsnähe aufweisen als die vogelperspektivische Kartenansicht der **Figur 1b****.**

## Patentansprüche

1. Verfahren zum Betrieb eines Navigationssystems, umfassend eine Kartendatenspeichereinrichtung, in der ein geographisches Gebiet digital mittels einer Vielzahl Vektoren beschrieben ist, zumindest eine Positionsermittlungseinrichtung, mit der die geographische Lage des Navigationssystems bestimmt werden kann, eine Darstellungserzeugungseinheit, die zur Erzeugung graphisch darzustellender Inhalte, insbesondere graphischer Kartenansichten eines Teils des in der Kartenspeichereinrichtung gespeicherten geographischen Gebiets, eingerichtet ist, wobei die Darstellungserzeugungseinheit in zumindest einer Kartenansichtsbetriebsart betrieben werden kann, die eine vogelperspektivische, insbesondere dynamische, Kartenansicht erzeugt, zumindest eine, insbesondere optische, Anzeigeeinrichtung mittels der zumindest die Anzeige von mittels der Darstellungserzeugungseinheit erzeugten Kartenansichten erfolgen kann,
mit folgenden Verfahrensschritten,
a) Auslesen eines Teils der Vektoren aus der Kartedatenspeichereinrichtung in die Darstellungserzeugungseinrichtung;
b) Umformen der Vektoren mittels der Darstellungserzeugungseinrichtung anhand von zumindest einer Umformungsvorschrift, wobei die Umformungsvorschriften von der Kartenansichtsbetriebsart abhängen, wobei das Erzeugen einer vogelperspektivischen Kartenansicht zumindest eine Umformungsvorschrift umfasst, bei der eine Umformung von Vektoren aus einem planen Bezugssystem in ein gekrümmtes Bezugssystem erfolgt, wobei das gekrümmte Bezugssystem aus zumindest einem Teil eines Zylindermantels eines Zylinders besteht;
c) Ausgabe einer, auf Basis zumindest eines Teils der umgeformten Vektoren aufgebauten, Kartenansicht mittels der Anzeigeeinrichtung.

2. Verfahren nach Anspruch 1,
**dadurch gekennzeichnet,**
**dass** der Zylinder in der Form eines geraden Kreiszylinders mit dem Kreisradius r ausgebildet ist.

3. Verfahren nach Anspruch 1 oder 2,
**dadurch gekennzeichnet,**
**dass** das Navigationssystem neben zumindest einer Positionsermittlungseinrichtung zumindest eine Bewegungsermittlungseinrichtung umfasst, mit der der Bewegungszustand des Navigationssystems bestimmt werden kann, wobei das Auslesen der Vektoren aus der Kartendatenspeichereinrichtung in Abhängigkeit von der Position des Navigationssystems und/oder des Bewegungszustands des Navigationssystems erfolgt.

4. Verfahren nach einem der Ansprüche 1 bis 3,
**dadurch gekennzeichnet,**
**dass** das Erzeugen einer vogelperspektivischen Kartenansicht in Abhängigkeit von zumindest einem Ansichtsparameter erfolgt.

5. Verfahren nach Anspruch 4,
**dadurch gekennzeichnet,**
**dass** der zumindest eine Ansichtsparameter den Blickpunkt (02) der vogelperspektivischen Kartenansicht und/oder den Blickwinkel (03) der vogelperspektivischen Kartenansicht und/oder den Kreisradius r des Zylinders festlegt.

6. Verfahren nach Anspruch 4 oder 5,
**dadurch gekennzeichnet,**
**dass** die Ansichtsparameter in Abhängigkeit von der Position des Navigationssystems und/oder des Bewegungszustands des Navigationssystems bestimmt werden.

7. Verfahren nach einem der Ansprüche 1 bis 6,
**dadurch gekennzeichnet,**
**dass** das Erzeugen dynamischer, vogelperspektivischer Kartenansichten während der Laufzeit des Navigationssystems in Echtzeit erfolgt, wobei die in der Darstellungserzeugungseinrichtung umzuformenden Vektoren direkt aus der Kartendatenspeichereinrichtung ausgelesen werden.

8. Verfahren nach einem der Ansprüche 1 bis 7,
**dadurch gekennzeichnet,**
**dass** die Umformungsvorschrift, bei der eine Umformung von Vektoren aus einem planen Bezugssystem in ein gekrümmtes Bezugssystem erfolgt, Teil eines Umformungsvorgangs ist, der auf die aus der Kartendatenspeicherungseinrichtung ausgelesenen Vektoren angewendet wird.

9. Verfahren nach einem der Ansprüche 1 bis 7,
**dadurch gekennzeichnet,**
**dass** die Umformungsvorschrift, bei der eine Umformung von Vektoren aus einem planen Bezugssystem in ein gekrümmtes Bezugssystem erfolgt, angewendet wird nachdem mittels eines Umformungsvorgangs bereits eine plane vogelperspektivische Kartenansicht aus den Vektoren der Kartendatenspeichereinrichtung erzeugt wurde.

10. Verfahren nach einem der Ansprüche 1 bis 9,
**dadurch gekennzeichnet,**
**dass** eine Umformungsvorschrift, bei der eine Umformung von Vektoren aus einem planen Bezugssystem in ein gekrümmtes Bezugssystem erfolgt, für Vektoren definiert ist, die ein geographisches Gebiet zweidimensional und/oder dreidimensional beschreiben.

11. Verfahren nach einem der Ansprüche 1 bis 10,
**dadurch gekennzeichnet,**
**dass** für die Umformungsvorschrift, bei der eine Umformung von Vektoren aus einem planen Bezugssystem in ein gekrümmtes Bezugssystem erfolgt, ein Abbruchkriterium definiert ist.

12. Verfahren nach einem der Ansprüche 1 bis 11,
**dadurch gekennzeichnet,**
**dass** die Darstellungserzeugungseinheit in zumindest einer zweiten Kartenansichtsbetriebsarten betrieben werden kann, die eine vogelperspektivische, insbesondere dynamische, Kartenansicht erzeugt, wobei die Umformung der Vektoren mittels der Darstellungserzeugungseinheit zumindest eine Umformungsvorschrift umfasst, bei dem eine Umformung von Vektoren aus einem planen Bezugssystem in ein gekrümmtes Bezugssystem erfolgt, wobei das gekrümmte Bezugssystem aus zumindest einem Teil einer Kugeloberfläche besteht.

13. Verfahren nach Anspruch 12,
**dadurch gekennzeichnet,**
**dass** die Auswahl der Kartenansichtsbetriebsart in Abhängigkeit von der Position des Navigationssystems und/oder des Bewegungszustands des Navigationssystems erfolgt.
